# EUROPÄISCHE PATENTSCHRIFT

(11) **EP 1 528 356 B1**
(45) Veröffentlichungstag und Bekanntmachung des Hinweises auf die Patenterteilung: **28.01.2015**
(21) Anmeldenummer: 04025540.8
(22) Anmeldetag: 27.10.2004
(51) Int. Cl.: G01B 21/16, G01M 13/04, G01B 7/14, G01B 11/14, F16C 19/52

(54) **Vorrichtung zur Überwachung von Grosswälzlagern**
Apparatus for monitoring of large roller bearings
Dispositif pour la surveillance de grands paliers à roulement

(30) Priorität: 28.10.2003 DE 20316544 U
(43) Veröffentlichungstag der Anmeldung: 04.05.2005
(73) Patentinhaber: Liebherr-Components Biberach GmbH, 88400 Biberach/Riß (DE)
(72) Erfinder: Mollhagen, Klaus-Peter, 87700 Memmingen (DE)
(74) Vertreter: Thoma, Michael

(56) Entgegenhaltungen:
- DE-A1- 10 107 067
- DE-A1- 19 919 007
- DE-C1- 19 755 000
- US-A- 5 336 996
- US-A- 5 955 880

## Beschreibung

Die vorliegende Erfindung betrifft eine Vorrichtung umfassend ein Großwälzlager und eine Überwachungsvorrichtung zur Überwachung des Großwälzlagers, das zwei Lagerringe und zwischen diesen laufende Wälzkörper aufweist, wobei die Überwachungsvorrichtung einen Sensor zur Erfassung von Relativbewegungen der Lagerringe zueinander umfasst.

Großwälzlager zeichnen sich in der Regel dadurch aus, dass die Mittenbohrung des inneren Lagerrings normalerweise im wesentlichen frei bleibt und nicht auf einer im wesentlichen massiven Welle sitzt. Wenigstens einer der Lagerringe wird über parallel zur Drehachse des Lagers angeordnete Schraubverbindungen mit einem Anschlussflansch des den Lagerring tragenden Bauteils verbunden. Solche Großwälzlager werden ein- oder mehrreihig mit verschiedenen Wälzkörpern wie Kugeln, Wälzzylindern, Wälzkegeln etc. ausgeführt und finden insbesondere bei Kranen, Baggern, Tagebauabraumgeräten oder Windenergieanlagen Verwendung.

Solche Großwälzlager müssen in einem regelmäßigen Zyklus einer Inspektion unterzogen werden, bei der aus sicherheitstechnischen Gründen die Laufbahnen auf Verschleiß und Ausbrüche untersucht werden sowie die Übergangsradien auf mögliche Risse überprüft werden. Herkömmlicherweise werden diese Inspektionen bei geöffnetem Großwälzlager durchgeführt, was wiederum die Demontage des Lagers aus dem Kran erforderlich macht. Es versteht sich, dass diese Demontage des Lagers zum Zwecke der Inspektion sehr aufwendig ist und zudem den Kran für eine geraume Zeit außer Betrieb setzt.

Es wurde daher in jüngerer Zeit vorgeschlagen, in das Großwälzlager sogenannte Wirbelstromsensoren einzubauen, von denen ein hochfrequentes Magnetfeld ausgeht, welches in den Laufbahnen und Radien des Großwälzlagers Wirbelstrom induziert. Die entstehenden Magnetfelder werden durch Laufbahnverschleiß, Risse und dergleichen beeinflusst, so dass durch Messung des Magnetfeldes eine Aussage über den Verschleißzustand der Lagerflächen gemacht werden kann (vgl. Technische Mitteilungen Krupp, Ausgabe April 1993).

Weiterhin ist aus der DE 197 55 000 C1 eine Verschleißmessvorrichtung für Großwälzlager bekannt, die eine in einem Lagerring aufgenommene Sonde besitzt, die mit ihrem Ende in einen Lagerhohlraum ragt und zum gegenüberliegenden Lagerring vorspringt. In diesem ist eine Nut vorgesehen, in der der Kopf der Sonde bei verschleißfreiem Zustand des Lagers berührungslos läuft. Erleidet das Lager hingegen einen vorgegebenen Verschleiß, berührt der Sondenkopf die Oberfläche des gegenüberliegenden Lagerrings, wodurch ein Kontakt geschlossen wird und ein entsprechendes Signal erzeugt wird. Obwohl diese bekannte Verschleißmessvorrichtung übermäßigen Verschleiß auch ohne Öffnen des Großwälzlagers erkennen kann, wäre es wünschenswert, den Lagerzustand präziser angeben zu können.

Ferner beschreiben die Schriften US 5,955,880, US 5,336,996 und DE 101 07 067 A1 jeweils Lagerüberwachungssysteme, die über berührungslose Sensoren einerseits axiale Lagerbewegungen und andererseits radiale Lagerbewegungen erfassen und diese jeweils mit Grenzwerten vergleichen, um übermäßigen Lagerverschleiß zu erfassen.

Der vorliegenden Erfindung liegt daher die Aufgabe zugrunde, eine verbesserte Überwachungsvorrichtung der eingangs genannten Art zu schaffen, die Nachteile des Standes der Technik vermeidet und letzteren in vorteilhafter Weise weiterbildet. Vorzugsweise soll eine präzisere und differenziertere Aussage über den Lagerzustand getroffen werden können.

Erfindungsgemäß wird diese Aufgabe durch eine Vorrichtung gemäß Anspruch 1 gelöst. Bevorzugte Ausgestaltungen der Erfindung sind Gegenstand der abhängigen Ansprüche.

Erfindungsgemäß besitzt die Überwachungsvorrichtung also zumindest zwei berührungslose Wegmesssensoren, von denen einer zur Bestimmung von Radialbewegungen und einer zur Bestimmung von Axialbewegungen der beiden Lagerringe relativ zueinander vorgesehen ist, sowie eine mit den Wegmesssensoren verbindbare Auswerteeinheit, die die bestimmten Radial- und Axialbewegungen mit vorgegebenen Grenzwerten vergleicht und anhand des Vergleichs den Lagerzustand bestimmt. Dabei wird anhand der bestimmten Radial- und Axialbewegungen das Kippspiel der beiden Lagerringe überwacht bzw. bestimmt und mit einem vorgegebenen Grenzwert verglichen, wobei anhand dieses Vergleichs der Lagerzustand bestimmt und angezeigt wird. Das Kippspiel der Lagerringe entspricht dabei der örtlichen axialen Bewegung der sich drehenden Teile in der Momentenebene und ist ein sicheres Maß für Verschleiß, Verformung oder Fehler wie Risse und dergleichen der Lagerringe. Auch Veränderungen in den Befestigungsschrauben der Lagerringe können über das Kippspiel erfasst werden, da eine vergrößerte Schraubendehnung in axialer Richtung das Kippspiel erhöht. Vorteilhafterweise können die beiden Wegmesssensoren voneinander beabstandet angeordnet sein und unterschiedliche Abschnitte des jeweiligen Lagerrings berührungslos abtasten, so dass eine sichere Aussage über das Kippspiel des Lagers abgeleitet werden kann. Die beiden Wegmesssensoren der Überwachungsvorrichtung sowie die zugehörige Auswerteeinheit bilden sozusagen eine Kippspiel-Erfassungsvorrichtung, mit Hilfe derer das Kippspiel der Lagerringe erfasst bzw. bestimmt werden kann. Die berührungslos arbeitenden Wegmesssensoren erleiden dabei keinerlei Verschleiß. Gegenüber Ein-/Aus-Tastern erlauben die Wegmesssensoren nicht nur die Anzeige eines kritischen Lagerverschleißes, sondern vielmehr eine qualifizierte Differenzierung des Verschleißzustands dahingehend, dass angezeigt werden kann, wie weit der Verschleiß vom kritischen Verschleiß noch weg ist bzw. inwieweit Verschleiß in nennenswertem Umfang überhaupt bereits aufgetreten ist.

Um eine kompakte Anordnung der Wegmesssensoren zu erreichen, können in Weiterbildung der Erfindung beide Wegmesssensoren Bewegungen in derselben Richtung messen, so dass beide Wegmesssensoren parallel zueinander ausgerichtet werden können. Um dennoch sowohl Axial- als auch Radialbewegungen der Lagerringe bestimmen zu können, kann hierbei ein Wegmesssensor eine zu der genannten Bewegungsrichtung senkrechte Messfläche abtasten, während der andere Wegmesssensor eine zu der Bewegungsrichtung keilförmig geneigte Schrägfläche abtastet. Die Auswerteeinheit bestimmt die Bewegungen senkrecht zu der genannten einen Bewegungsrichtung aus der Differenz der beiden Sensorsignale. Bei dieser Ausführung werden also Bewegungen in einer Richtung direkt erfasst, während Bewegungen in der Richtung senkrecht hierzu indirekt erfasst werden.

Die beiden Wegmesssensoren sind vorzugsweise in einer gemeinsamen Ebene angeordnet, die vorzugsweise die Drehachse des Lagers enthalten kann. Die Anordnung in einer gemeinsamen Ebene schließt bei der Wegerfassung über den Umfang mögliche Ungleichmäßigkeiten in der Bewegung aus und bewirkt eine erhöhte Messgenauigkeit. Die Differenzbildung des an der Schrägfläche erzeugten Sensorsignals und des an der senkrechten Messfläche erzeugten Sensorsignals kann frei von Störeinflüssen erfolgen.

Eine besonders geschützte und kompakte Anordnung kann dadurch erreicht werden, dass die beiden Wegmesssensoren radial ausgerichtet sind und Umfangsflächen der Lagerringe abtasten, wobei die beiden Sensoren vorzugsweise im Inneren eines Lagerrings angeordnet sind. Grundsätzlich wäre es auch denkbar, die Wegmesssensoren axial anzuordnen und Radialflächen der Lagerringe abzutasten. Die radiale Anordnung mit Abtastung von Umfangsflächen besitzt jedoch den Vorteil, dass mehr Platz zur Verfügung steht und die Wegmesssensoren nicht mit den Wälzkörpern kollidieren. Großwälzlager bilden regelmäßig Axiallager, so dass entsprechende auf radialen Lagerflächen laufende Wälzkörper vorgesehen sind.

Insbesondere können die beiden Sensoren im inneren Lagerring angeordnet sein und eine Innenumfangsfläche des äußeren Lagerrings abtasten, wobei der Kopf der Sensoren vorzugsweise im abgedichteten Lagerspalt des Großwälzlagers angeordnet ist. Bei Großwälzlagern für Krane ist regelmäßig der äußere Lagerring mit einer Außenverzahnung versehen, mit der ein Antriebsritzel des Drehwerks des Krans kämmt. Die Anordnung der Sensoren im inneren Lagerring besitzt dabei den Vorteil, dass die Messsensoren nicht mit der Verzahnung kollidieren.

Es versteht sich jedoch, dass die Sensoranordnung auch im umgekehrten Fall Verwendung finden kann, wenn das Großwälzlager eine Innenverzahnung aufweist. In diesem Fall sind die beiden Sensoren sozusagen spiegelbildlich, vorteilhafterweise im äußeren Lagerring, angeordnet und tasten eine Außenumfangsfläche des inneren Lagerringes ab.

Sind beide Sensoren radial angeordnet, tastet vorteilhafterweise einer der beiden Wegsensoren eine konische Ringumfangsfläche ab, während der andere eine zylindrische Ringumfangsfläche abtastet. Die Neigung der Schrägfläche gegenüber der senkrechten Fläche, auf die der andere Sensor gerichtet ist, kann unterschiedlich gewählt werden und nach einer Ausführung der Erfindung 20° oder weniger betragen.

In Weiterbildung der Erfindung bestimmt die Überwachungsvorrichtung nicht nur im Lagerspalt das Spiel der beiden Lagerringe relativ zueinander, sondern überwacht auch Bewegungen der Lagerringe, insbesondere deren Kippspiel, außerhalb des Lagerspalts. In Weiterbildung der Erfindung kann hierzu zumindest ein weiterer berührungsloser Wegmesssensor vorgesehen sein, mit Hilfe dessen axiale Bewegungen des Lagerrings im Bereich seines Befestigungsabschnitts, insbesondere am Anschlussflansch, an dem der Lagerring befestigt ist, bestimmt werden kann. Die Auswerteeinheit vergleicht die mit Hilfe des Wegmesssensors bestimmten Bewegungen des Lagerrings mit vorgegebenen Grenzwerten und kann in Abhängigkeit des Vergleichs den Zustand der Befestigung, insbesondere der Schraubenbefestigung des Lagerrings am Anschlussflansch, bestimmen und anzeigen.

Der genannte weitere Wegmesssensor kann dabei die axialen Bewegungen des Lagerrings außerhalb des Lagerspalts direkt messen. In diesem Fall ist der Wegmesssensor in axialer Richtung ausgerichtet und auf eine radiale Fläche des Lagerrings bzw. eines damit verbundenen Ringteils gerichtet.

Alternativ oder zusätzlich kann ein in radialer Richtung ausgerichteter Wegmesssensor vorgesehen sein, der auf eine zur radialen Richtung spitzwinklig geneigten Schrägfläche Bewegungen des Lagerrings in radialer Richtung misst. Über die spitzwinklig geneigte Schrägfläche kann aus den erfassten Radialbewegungen die entsprechenden Axialbewegungen des Lagerrings relativ zum Anschlussflansch von der Auswerteeinheit bestimmt werden.

Die Erfindung wird nachfolgend anhand bevorzugter Ausführungsbeispiele und zugehöriger Zeichnungen näher erläutert. In den Zeichnungen zeigen:
- Fig. 1:: einen ausschnittsweisen Axialschnitt durch ein Großwälzlager mit einer diesem zugeordneten Überwachungsvorrichtung nach einer bevorzugten Ausführung der Erfindung,
- Fig. 2:: eine vergrößerte, ausschnittsweise Axialschnittansicht eines Großwälzlagers ähnlich Fig. 1 mit einer alternativen Anordnung der Wegmesssensoren S1 und S2,
- Fig. 3:: einen Axialschnitt durch ein Großwälzlager mit einer zugeordneten Überwachungsvorrichtung nach einer weiteren Ausführung der Erfindung, und
- Fig. 4:: einen ausschnittsweisen Axialschnitt durch ein Großwälzlager mit einer diesem zugeordneten Überwachungsvorrichtung nach einer weiteren bevorzugten Ausführung der Erfindung.

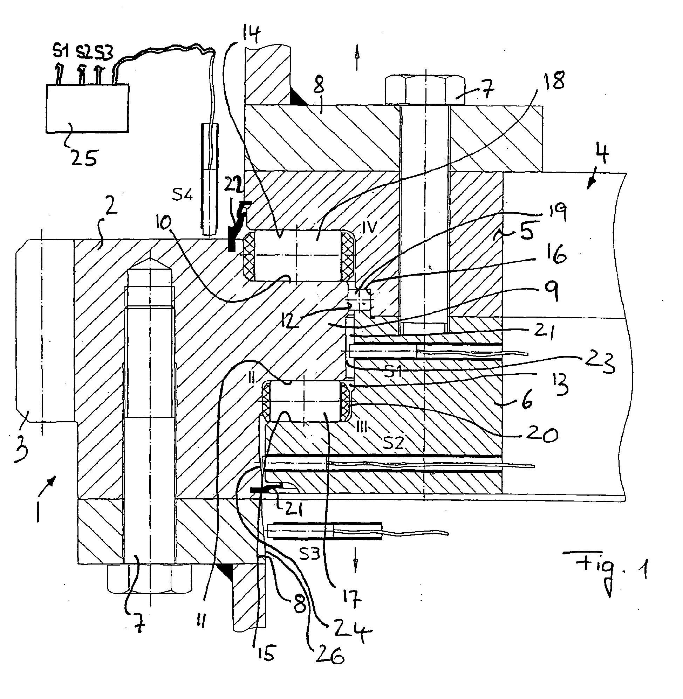

Das in Figur 1 gezeigte Großwälzlager 1 findet typischerweise in einem Kran Verwendung, dessen Oberwagen es drehbar zu dessen Unterwagen lagert. Es umfasst einen äußeren Lagerring 2, der eine Außenverzahnung 3 aufweist, sowie einen inneren Lagerring 4, der zweiteilig ausgebildet ist und einen Oberring 5 und einen Unterring 6 umfasst.

Der äußere Lagerring 2 ist mittels einer Vielzahl von Schrauben 7, die über den Umfang des Lagerrings verteilt sind, am Anschlussflansch 8 befestigt. Der innere Lagerring 4 ist in entsprechender Weise mittels einer Vielzahl von Schrauben 7 am Anschlussflansch 8 des den inneren Lagerring 4 tragenden Bauteils befestigt, wobei die Schrauben 7 gleichzeitig der Verbindung von Oberring 5 und Unterring 6 dienen können, jedoch nicht müssen. Die Schrauben 7 erstrecken sich parallel zur Drehachse des Großwälzlagers 1.

Wie Figur 1 zeigt, besitzt der äußere Lagerring 2 einen radial nach innen vorspringenden Absatz 9, an dessen Ober- und Unterseiten jeweils eine radiale Lauffläche 10, 11 und an dessen Innenumfangsfläche eine Umfangslauffläche 12 ausgebildet ist. Der Absatz 9 springt dabei in eine insgesamt nutförmige, in Umfangsrichtung umlaufende Ausnehmung 13 vor, die in dem inneren Lagerring 4, genauer gesagt in dessen äußeren Umfangsfläche, ausgebildet ist. Die Ausnehmung 13 besitzt an ihren oberen und unteren Flanken radiale Laufflächen 14 und 15 sowie an ihrem Grund eine Umfangslauffläche 16, die jeweils den Lauffläche 10 und 11 bzw. 12 am Absatz 9 gegenüberliegen. Wie Figur 1 zeigt, laufen zwischen den Laufflächen 10 und 14 bzw. 11 und 15 zylindrische Wälzkörper 17 und 18, die ein Axiallager bilden, sowie zwischen den Umfangslaufflächen 12 und 16 ebenfalls zylindrische Wälzkörper 19, die eine radiale Abstützung bewirken und ein Radiallager bilden. Die Wälzkörper können in an sich bekannter Weise durch einen Käfig 20 in Position gehalten werden. Der Lagerspalt 21 zwischen den beiden Lagerringen 2 und 4 kann durch Dichtungen 22 nach außen hin abgedichtet sein, so dass der Lagerraum gegen äußere Einflüsse geschützt ist.

Die dem Großwälzlager 1 zugeordnete Überwachungsvorrichtung umfasst in der gezeichneten Ausführungsform vier jeweils berührungslos arbeitende Wegmesssensoren S1, S2, S3 und S4. Die beiden Wegmesssensoren S1 und S2 sind dabei im Inneren des inneren Lagerrings 4 angeordnet und erstrecken sich jeweils in radialer Richtung. Der Kopf der Sensoren S1 und S2 springt dabei in den Lagerspalt 21 vor bzw. endet an diesem. Die Sensoren S1 und S2 tasten Umfangsflächen des äußeren Lagerrings 2 ab, die den Lagerspalt 21 partiell begrenzen. Wie Figur 1 zeigt, tastet der Wegmesssensor S1 dabei eine zylindrische Umfangsfläche 23 zwischen den beiden Wälzkörperreihen 17 und 18 ab. Der zweite Wegmesssensor S2 tastet hingegen eine schräge Umfangsfläche des äußeren Lagerrings 2 ab, die leicht konisch ausgebildet ist, wie Figur 1 zeigt. Der Kegelwinkel der konischen Umfangsfläche 24 beträgt vorzugsweise weniger als 25°.

Obwohl die beiden Wegmesssensoren S1 und S2 radialen Versatz zwischen den beiden Lagerringen 2 und 4 messen, kann aus der Differenz der Signale der beiden Wegmesssensoren S1 und S2 zusätzlich zu den Radialbewegungen zwischen den beiden Lagerringen 2 und 4 auch die auftretende Axialbewegung bestimmt werden, und zwar über die kegelige Umfangsfläche 24, deren Neigung bekannt ist. Die beiden Sensoren S1 und S2 sind mit der Auswerteeinheit 25 verbunden, die die Signale einerseits voneinander subtrahiert, um neben den Radialbewegungen auch die Axialbewegungen zu bestimmen, und andererseits mit vorgegebenen Grenzwerten vergleicht, um Verschleiß zu bestimmen und anzeigen zu können. Aus den über die Sensoren S1 und S2 bestimmten Radial- und Axialbewegungen kann das Kippspiel der beiden Lagerringe 2 und 4 zueinander bestimmt werden. Insbesondere dieses Kippspiel ist ein Maß für den Zustand des Lagers. Einerseits zeigen sich sowohl Verschleiß wie auch Verformung der Lagerringe als Kippspielvergrößerungen. Zum anderen erhöhen Fehler im Bauteil, wie z. B. Risse, das Kippspiel.

Wie Figur 1 zeigt, können weiterhin auch außerhalb des Lagerspalts 21 angeordnete Wegmesssensoren S3 und S4 vorgesehen sein. Auch hier erfasst einer der Wegmesssensoren Bewegungen einer zur Sensorrichtung senkrecht stehenden Fläche, während der andere Sensor Bewegungen einer Schrägfläche erfasst. Der Sensor S4 ist axial, d.h. parallel zur Drehachse des Großwälzlagers 1 angeordnet und erfasst unmittelbar Axialbewegungen des äußeren Lagerrings 2 im Bereich der darin eingeschraubten Schrauben 7. Der Wegmesssensor S3 hingegen ist radial angeordnet und erfasst radiale Bewegungen der kegeligen Innenumfangsfläche 26 des den äußeren Lagerring 2 haltenden Lagerflansches. Auch hier kann in der beschriebenen Weise durch Differenzbildung zwischen den beiden Sensorsignalen zusätzlich zu dem unmittelbar erfassten Axialspiel auch das Radialspiel erfasst werden. Hieraus kann in Verbindung mit der bekannten Geometrie der Sensoranordnung das Kippspiel bestimmt werden. Die Auswerteeinheit 25 vergleicht dieses Kippspiel mit Grenzwerten, die vorgebbar sind, um anhand dieses Vergleichs den Lagerzustand zu bestimmen. Die Bestimmung des Kippspiels ist auch hier besonders vorteilhaft, da eine vergrößerte Dehnung der Schrauben in axialer Richtung das Kippspiel vergrößert.

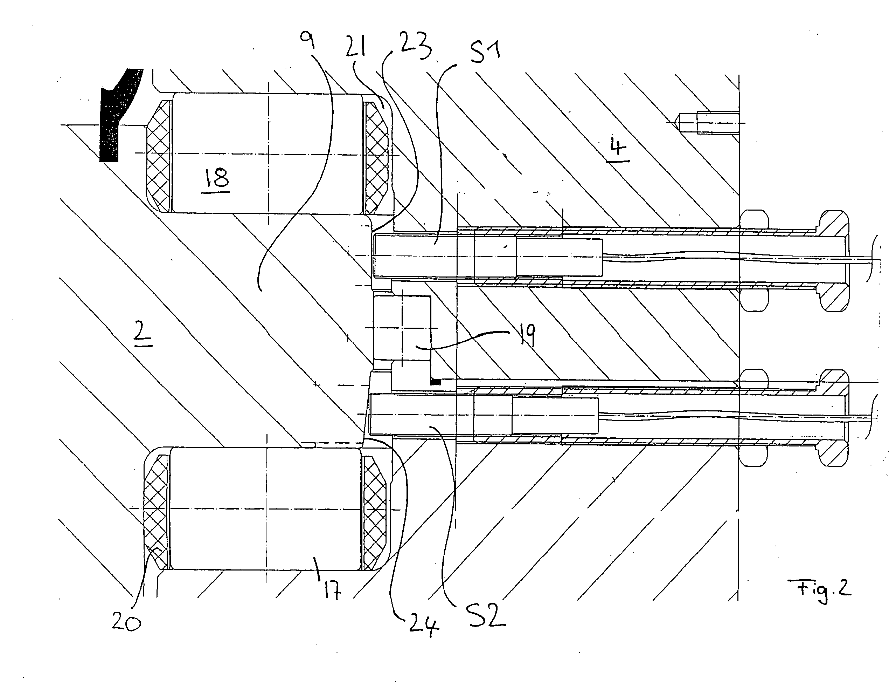

Es versteht sich, dass die in Figur 1 gezeigte Anordnung der Sensoren auch abgeändert werden kann. Wie Figur 2 zeigt, können beispielsweise die beiden Sensoren S1 und S2 die Innenumfangsfläche des radial nach innen vorspringenden Absatzes 9 abtasten. Auch hier tastet der Sensor S1 eine zylindrische Umfangsfläche ab, während der Sensor S2 eine kegelige Umfangsfläche abtastet. Dies ermöglicht in der beschriebenen Weise neben der Bestimmung von Radialspiel auch die Bestimmung von Axialspiel, woraus wiederum das Kippspiel bestimmbar ist und mit entsprechenden Grenzwerten vergleichbar ist.

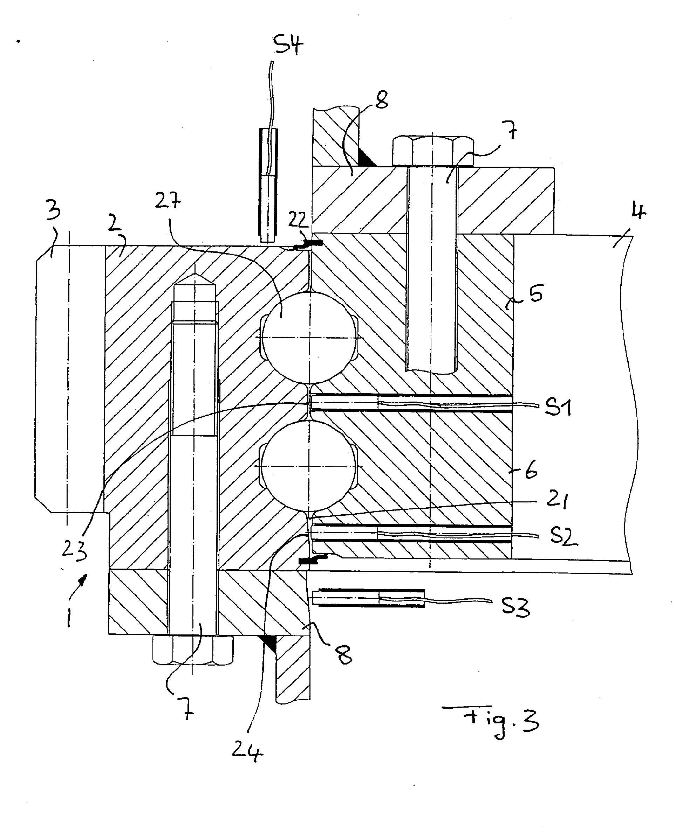

Weiterhin versteht es sich, dass das Großwälzlager verschieden ausgebildet sein kann. Wie Figur 3 zeigt, kann die axiale Abstützung und die radiale Abstützung durch dieselben Wälzkörper bewirkt werden, insbesondere dann, wenn das Großwälzlager 1 als Kugellager ausgebildet ist. Wie Figur 3 zeigt, kann das Großwälzlager 1 als zweireihiges Kugellager ausgebildet sein. Hierzu sind einerseits im äußeren Lagerring 2 und andererseits im inneren Lagerring 4 jeweils zwei im Querschnitt etwa halbkreisförmige Laufflächen ausgebildet (vgl. Figur 3), die zusammen die Laufflächen für die als Kugeln ausgebildete Wälzkörper 27 bilden. Die Anordnung der Sensoren S1 bis S4 entspricht im wesentlichen der zuvor beschriebenen.

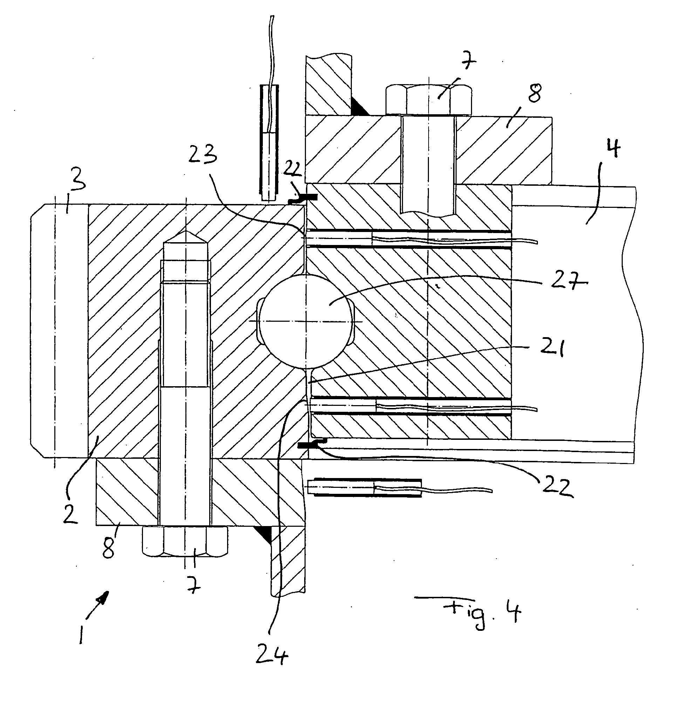

Wie Figur 4 zeigt, kann das Großwälzlager 1 auch einreihig ausgebildet sein. In der in Figur 4 gezeichneten Ausführung ist das Großwälzlager als einreihiges Kugellager ausgebildet. Die Anordnung der Sensoren S1 bis S4 entspricht im wesentlichen der zuvor beschriebenen.

## Patentansprüche

1. Vorrichtung umfassend ein Großwälzlager (1) und eine Überwachungsvorrichtung zur Überwachung des Großwälzlagers (1), wobei das Großwälzlager (1) zwei Lagerringe (2, 4) und zwischen diesen laufende Wälzkörper (17, 18, 19; 27) aufweist, und wobei die Überwachungsvorrichtung einen Sensor (S1, S2, S3, S4) zur Erfassung von Relativbewegungen der Lagerringe (2, 4) zueinander aufweist, **gekennzeichnet dadurch, dass** die Überwachungsvorrichtung eine Kippspiel-Erfassungsvorrichtung zur Erfassung eines Kippspiels der beiden Lagerringe (2, 4) aufweist, die zumindest zwei berührungslose Wegmesssensoren (S1, S2), von denen einer zur Bestimmung von Radialbewegungen und einer zur Bestimmung von Axialbewegungen der Lagerringe (2, 4) relativ zueinander vorgesehen ist, sowie eine mit den Wegmesssensoren (S1, S2) verbindbare Auswerteeinheit (25) aufweist, wobei die Auswerteeinheit (25) dazu eingerichtet ist, aus den Sensorsignalen Kippspielbewegungen der beiden Lagerringe (2, 4) relativ zueinander zu bestimmen und die Kippspielbewegungen mit vorgegebenen Grenzwerten zu vergleichen und anhand des Vergleichs den Lagerzustand zu bestimmen.

2. Vorrichtung nach dem vorhergehenden Anspruch, wobei beide Wegmesssensoren (S1, S2) dazu eingerichtet sind, Bewegungen in derselben Richtung zu messen, wobei ein Wegmesssensor (S1) dazu eingerichtet ist, eine zu der Bewegungsrichtung senkrechte Messfläche (23) abzutasten und der andere Wegmesssensor (S2) dazu eingerichtet ist, eine zu der Bewegungsrichtung keilförmig geneigte Schrägfläche (24) abzutasten, und die Auswerteeinheit (25) dazu eingerichtet ist, die Bewegungen senkrecht zu der genannten einen Bewegungsrichtung aus der Differenz der beiden Sensorsignale zu bestimmen.

3. Vorrichtung nach einem der vorhergehenden Ansprüche, wobei die beiden Wegmesssensoren (S1, S2) in einer gemeinsamen Ebene enthaltend die Drehachse des Lagers angeordnet sind.

4. Vorrichtung nach einem der vorhergehenden Ansprüche, wobei die beiden Wegmesssensoren (S1, S2) radial ausgerichtet sind und dazu eingerichtet sind, Umfangsflächen der Lagerringe (2, 4) abzutasten.

5. Vorrichtung nach einem der vorhergehenden Ansprüche, wobei die beiden Wegmesssensoren (S1, S2) im Inneren eines Lagerrings (4) aufgenommen sind.

6. Vorrichtung nach einem der vorhergehenden Ansprüche, wobei die beiden Wegmesssensoren (S1, S2) im inneren Lagerring (4) angeordnet sind und dazu eingerichtet sind, eine Innenumfangsfläche des äußeren Lagerrings (2) abzutasten.

7. Vorrichtung nach einem der Ansprüche 1 bis 5, wobei die beiden Wegmesssensoren (S1, S2) im äußeren Lagerring (2) angeordnet sind und dazu eingerichtet sind, eine Außenumfangsfläche des inneren Lagerrings (4) abzutasten.

8. Vorrichtung nach einem der vorhergehenden Ansprüche, wobei einer der beiden Wegmesssensoren (S2) dazu eingerichtet ist, eine konische Ringumfangsfläche abzutasten und der andere Wegmesssensor (S1) dazu eingerichtet ist, eine zylindrische Ringumfangsfläche abzutasten.

9. Vorrichtung nach Anspruch 3 oder einem der darauf zurückbezogenen Ansprüche, wobei die Schrägfläche (24) gegenüber der senkrechten Fläche (23) um 25° oder weniger geneigt ist.

10. Vorrichtung nach einem der vorhergehenden Ansprüche, wobei zumindest ein Wegmesssensor (S3, S4) außerhalb eines Lagerspalts (21) zwischen den beiden Lagerringen (2, 4) angeordnet ist.

11. Vorrichtung nach einem der vorhergehenden Ansprüche, wobei zumindest ein Wegmesssensor (S3) in axialer Richtung parallel zur Drehachse des Großwälzlagers angeordnet ist und dazu eingerichtet ist, Axialbewegungen eines Lagerrings zu erfassen.

## Claims

1. An apparatus comprising a large roller bearing (1) and a monitoring apparatus for monitoring the large roller bearing (1), wherein the large roller bearing (1) has two bearing rings (2, 4) and roller bodies (17, 18, 19; 27) running between them, and wherein the monitoring apparatus has a sensor (S1, S2, S3, S4) for detecting relative movements of the bearing rings (2, 4) with respect to one another, **characterised in that** the monitoring apparatus has a tilt clearance detection apparatus for detecting a tilt clearance of the two bearing rings (2, 4) which has at least two contactless path measurement sensors (S1, S2,) of which one is provided for determining radial movements and one is provided for determining axial movements of the bearing rings (2, 4) relative to one another, and which has an evaluation unit (25) connectable to the path measurement sensors (S1, S2), wherein the evaluation unit (25) is configured to determine tilt clearance movements of the two bearing rings (2, 4) relative to one another from the sensor signals, to compare the tilt clearance movements with predefined limit values and to determine the bearing state with reference to the comparison.

2. An apparatus in accordance with the preceding claim, wherein both path measurement sensors (S1, S2) are configured to measure movements in the same direction, wherein one path measurement sensor (S1) is configured to sample a measurement surface (23) perpendicular to the direction of movement and the other path measurement sensor (S2) is configured to sample a slanted surface (24) inclined in wedge shape with respect to the direction of movement and the evaluation unit (25) is configured to determine the movements perpendicular to the named one direction of movement from the difference of the two sensor signals.

3. An apparatus in accordance with one of the preceding claims, wherein the two path measurements sensors (S1, S2) are arranged in a common plane containing the axis of rotation of the bearing.

4. An apparatus in accordance with one of the preceding claims, wherein the two path measurement sensors (S1, S2) are radially orientated and are configured to sample peripheral surfaces of the bearing rings (2, 4).

5. An apparatus in accordance with one of the preceding claims, wherein the two path measurement sensors (S1, S2) are received in the interior of a bearing ring (4).

6. An apparatus in accordance with one of the preceding claims, wherein the two path measurement sensors (S1, S2) are arranged in the inner bearing ring (4) and are configured to sample an inner peripheral surface of the outer bearing ring (2).

7. An apparatus in accordance with one of the claims 1 to 5, wherein the two path measurement sensors (S1, S2) are arranged in the outer bearing ring (2) and are configured to sample an outer peripheral surface of the inner bearing ring (4).

8. An apparatus in accordance with one of the preceding claims, wherein one of the two path measurement sensors (S2) is configured to sample a conical peripheral ring surface and the other path measurement sensor (S1) is configured to sample a cylindrical peripheral ring surface.

9. An apparatus in accordance with claim 3 or with one of the claims dependent thereon, wherein the slanted surface (24) is inclined by 25° or less with respect to the perpendicular surface (23).

10. An apparatus in accordance with one of the preceding claims, wherein at least one path measurement sensor (S3, S4) is arranged outside a bearing gap (21) between the two bearing rings (2, 4).

11. An apparatus in accordance with one of the preceding claims, wherein at least one path measurement sensor (S3) is arranged parallel to the axis of rotation of the large roller bearing in the axial direction and is configured to detect axial movements of a bearing ring.

## Revendications

1. Dispositif comprenant un grand palier à roulement (1) et un dispositif de surveillance destiné à surveiller le grand palier à roulement (1), le grand palier à roulement (1) comportant deux bagues de palier (2, 4) et des organes de roulement (17, 18, 19 ; 27) tournant entre celles-ci, et le dispositif de surveillance comportant un capteur (S1, S2, S3, S4) destiné à détecter des mouvements relatifs des bagues de palier (2, 4) l'une par rapport à l'autre,
**caractérisé en ce que** le dispositif de surveillance comporte un dispositif de détection de jeu de basculement destiné à détecter un jeu de basculement des deux bagues de palier (2, 4), qui comporte au moins deux capteurs de mesure de déplacement (S1, S2) sans contact, dont un est destiné à déterminer des mouvements radiaux et un à déterminer des mouvements axiaux des bagues de palier (2, 4) l'une par rapport à l'autre, ainsi qu'une unité d'évaluation (25) qui peut être raccordée aux capteurs de mesure de déplacement (S1, S2), l'unité d'évaluation (25) étant configurée pour, à partir des signaux de capteur, déterminer des mouvements de jeu de basculement des deux bagues de palier (2, 4) l'une par rapport à l'autre et comparer les mouvements de jeu de basculement à des valeurs limites prédéfinies et déterminer l'état du palier à l'aide de la comparaison.

2. Dispositif selon la revendication précédente, dans lequel les deux capteurs de mesure de déplacement (S1, S2) sont configurés pour mesurer des mouvements dans la même direction, un capteur de mesure de déplacement (S1) étant configuré pour balayer une surface de mesure (23) perpendiculaire à la direction de mouvement et l'autre capteur de mesure de déplacement (S2) étant configuré pour balayer une surface oblique (24) inclinée en forme de coin vers la direction de mouvement, et l'unité d'évaluation (25) étant configurée pour déterminer les mouvements perpendiculaires à ladite une direction de mouvement à partir de la différence entre les deux signaux de capteur.

3. Dispositif selon l'une des revendications précédentes, dans lequel les deux capteurs de mesure de déplacement (S1, S2) sont disposés dans un plan commun comprenant l'axe de rotation du palier.

4. Dispositif selon l'une des revendications précédentes, dans lequel les deux capteurs de mesure de déplacement (S1, S2) sont orientés de manière radiale et sont configurés pour balayer des surfaces circonférentielles des bagues de palier (2, 4).

5. Dispositif selon l'une des revendications précédentes, dans lequel les deux capteurs de mesure de déplacement (S1, S2) sont logés à l'intérieur d'une bague de palier (4).

6. Dispositif selon l'une des revendications précédentes, dans lequel les deux capteurs de mesure de déplacement (S1, S2) sont disposés dans la bague de palier intérieure (4) et sont configurés pour balayer une surface circonférentielle intérieure de la bague de palier extérieure (2).

7. Dispositif selon l'une des revendications 1 à 5, dans lequel les deux capteurs de mesure de déplacement (S1, S2) sont disposés dans la bague de palier extérieure (2) et sont configurés pour balayer une surface circonférentielle extérieure de la bague de palier intérieure (4).

8. Dispositif selon l'une des revendications précédentes, dans lequel l'un des deux capteurs de mesure de déplacement (S2) est configuré pour balayer une surface circonférentielle de bague conique et l'autre capteur de mesure de déplacement (S1) est configuré pour balayer une surface circonférentielle de bague cylindrique.

9. Dispositif selon la revendication 3 ou selon l'une des revendications s'y référant, dans lequel la surface oblique (24) est inclinée de 25° ou moins par rapport à la surface perpendiculaire (23).

10. Dispositif selon l'une des revendications précédentes, dans lequel au moins un capteur de mesure de déplacement (S3, S4) est disposé hors d'un jeu de palier (21) entre les deux bagues de palier (2, 4).

11. Dispositif selon l'une des revendications précédentes, dans lequel au moins un capteur de mesure de déplacement (S3) est disposé parallèle à l'axe de rotation du grand palier à roulement dans le sens axial et est configuré pour détecter des mouvements axiaux d'une bague de palier.
